# EUROPEAN PATENT SPECIFICATION

(11) **EP 2 161 302 B1**
(45) Date of publication and mention of the grant of the patent: **16.05.2012**
(21) Application number: 08765609.6
(22) Date of filing: 13.06.2008
(51) Int. Cl.: C08L 23/26, C08L 3/02, C08L 101/16, C08L 23/08

(54) **RESIN COMPOSITION CONTAINING STARCHY MATERIAL**
HARZZUSAMMENSETZUNG, ENTHALTEND EIN STÄRKEHALTIGES MATERIAL
COMPOSITION DE RÉSINE CONTENANT UN MATÉRIAU AMYLACÉ

(30) Priority: 14.06.2007 JP 2007157651; 10.08.2007 JP 2007209637; 21.09.2007 JP 2007244745
(43) Date of publication of application: 10.03.2010
(73) Proprietor: Du Pont-Mitsui Polychemicals Co., Ltd., Tokyo 105-7117 (JP)
(72) Inventor: SUZUKI, Kaoru, Ichihara-shi Chiba 299-0108 (JP); SATO, Norihiko, Ichihara-shi Chiba 299-0108 (JP); UCHIYAMA, Hiroshi, Tokyo 105-7117 (JP)
(74) Representative: Benson, John Everett
(86) International application number: PCT/JP2008/060899
(87) International publication number: WO 2008/153149

(56) References cited:
- JP-A- 06 041 351
- JP-A- 07 113 028
- JP-A- 2004 002 613
- JP-A- 2004 169 006

## Description

### Technical Field:

This invention relates to a resin composition blended with a starchy material which features excellent plastic property and flexibility despite of a large content of the starchy material, which offers mechanical strength large enough for practical use, and which is very friendly for global environment, and to a molded article comprising the above resin composition.
The invention, further, relates to a resin composition blended with a starchy material featuring very excellent antistatic property, moisture permeability and transparency in addition to the above-mentioned properties, and to a molded article thereof.

### Background Art:

From the standpoint of maintaining global environment in recent years, in particular, it is becoming an important problem to decrease the amount of carbon dioxide emission that contributes to global warming.
In order to solve this problem, an increasing concern is focused on recycling the synthetic resins imposing limitation on their use, as well as on the use of naturally existing materials and, particularly, on the components stemming from plants, and development has now been forwarded.
Among the components stemming from plants, study has been conducted concerning starches since they are economical and easily available.
However, a starch comprises a long-chain molecular amylose having a molecular weight of tens of thousands and a highly branched amylopectin having a molecular weight of hundreds of thousands and, therefore, can be very little crystallized without almost exhibiting thermoplasticity. Therefore, a plastic material cannot be prepared from the starch alone.
As for resin compositions obtained by blending a starch with a polyolefin resin such as polyethylene or the like, it has been known that the mechanical strength greatly decreases with an increase in the content of starch and, besides, optical property becomes poor.
This is because the particles of starch are not completely and homogeneously compatible with the resin and, therefore, the affinity is not sufficient between the starch particles and the resin interface, and the strength is lowered in such portions.

Attempts have been made to improve this. For example, patent document 1 discloses blending a starch with a particular acid-modified polyolefin as a compatibility-imparting agent at the time of being blended with a polyolefin resin.
However, if the starch is contained in large amounts, even the thus obtained resin composition fails to exhibit sufficiently large mechanical strength when it is molded. Further, when molded into a film or a sheet, starch particles of large particle sizes are non-uniformly distributed in the matrix of the resin composition. Therefore, the film that is obtained or molded possesses non-uniform thickness and develops cracks during the stretch working. Therefore, limitation is imposed on decreasing the thickness of the film making it difficult to obtain products that can be favorably put into practical use.

Further, patent document 2 discloses an ionomer composition obtained by blending a starch with an ionomer of an ethylene/unsaturated carboxylic acid copolymer using monovalent to trivalent metals as an ion source. There has been described that this composition can be more excellently worked than the conventional counterparts, and the molded article such as a film that is obtained is homogeneous and exhibits excellent mechanical strength, optical properties and biodegradable properties.

Patent document 1: JP-A-2004-2613
Patent document 2: JP-A-7-113028

### Disclosure of the Invention:

### Problems that the Invention is to Solve:

However, the molded products such as films and sheets obtained from the above compositions lack flexibility to some extent and find limited applications.
Therefore, it has been strongly urged in this field of art to provide a composition having more flexibility and excellent plasticity.
To meet the above requirement, therefore, the present inventors have conducted keen study, have discovered that when a starchy material is blended with at least one of those selected from a particular copolymer resin, a resin composition or an ionomer using them as a base resin in a particular amount, there is obtained a molding material having excellent mold workability, and excellent balance between the flexibility and the mechanical properties despite the starchy material is contained in large amounts and that when a particular composition is used among them, there is obtained a molding material having excellent moisture permeability, antistatic property and transparency (haze) in addition to the above-mentioned properties, and have finished the invention based on the above discovery.

It is, therefore, an object of the present invention to provide a molding material of a resin composition which has good affinity to a starchy material, is homogeneously compatible therewith even without adding compatibility-imparting agent, can be favourably mold-worked despite the starchy material is blended in large amounts, and features excellent balance between the flexibility and the mechanical properties.
Another object of the present invention is to provide a molding material of a resin composition featuring very excellent moisture permeability, antistatic property and transparence (haze) in addition to the above-mentioned properties.
A further object of the present invention is to provide a molded article made from the above molding material of resin composition.

### Means for Solving the Problems:

According to the present invention, there is provided a resin composition comprising 10 to 97% by weight of at least one (A) of those selected from (a-1) an ethylene copolymer containing an unsaturated carboxylic acid and an unsaturated carboxylic acid ester as constituent units or a copolymer composition thereof, and (a-2) an ionomer comprising, as a base resin, the ethylene copolymer containing the unsaturated carboxylic acid and the unsaturated carboxylic acid ester as constituent units or the copolymer composition thereof; and 3 to 90% by weight a starchy material, wherein the copolymer composition is obtainable by blending the ethylene copolymer containing the unsaturated carboxylic acid and the unsaturated carboxylic acid ester as constituent units with an ethylene/unsaturated carboxylic acid copolymer and/or an ethylene/unsaturated carboxylic acid ester copolymer, or is obtainable by blending an ethylene/unsaturated carboxylic acid copolymer and an ethylene/unsaturated carboxylic acid ester polymer.

It is particularly desired that the resin composition comprises 20 to 90% by weight of (A) and 10 to 80% by weight of (B).

It is further desired that the content of the unsaturated carboxylic acid unit is 3 to 30% by weight and the content of the unsaturated carboxylic acid ester unit is 0.3 to 30% by weight in (a-1) the ethylene copolymer that contains the unsaturated carboxylic acid and the unsaturated carboxylic acid ester as constituent units or the copolymer composition thereof.

Further, it is particularly desired that the unsaturated carboxylic acid is a (meth)acrylic acid and the unsaturated carboxylic acid ester is an alkyl (meth) acrylate in (a-1) the ethylene copolymer that contains the unsaturated carboxylic acid and the unsaturated carboxylic acid ester as constituent units or the copolymer composition thereof.

It is, further, desired that the ionomer (a-2) comprising, as a base material, (a-1) the ethylene copolymer that contains the unsaturated carboxylic acid and the unsaturated carboxylic acid ester as constituent units or the copolymer composition thereof, is an ionomer containing monovalent to trivalent metals as an ion source and, particularly, is an ionomer containing sodium and/or potassium as an ion source.

As the most preferred embodiment of the invention, further, there is provided a resin composition for molding comprising 20 to 90% by weight of a sodium or potassium ionomer (a-3) having a neutralization degree of 50 to 98% and comprising, as a base resin, an ethylene copolymer having 10 to 15% by weight of a (meth)acrylic acid unit and 5 to 11% by weight of an alkyl (meth) acrylate unit or an ethylene copolymer composition thereof, and having a melt flow rate at 190°C under a load of 2160 g (in compliance with the JIS K7210-1999) of 0.05 to 500 g/10 min.; and 10 to 80% by weight of a starchy material (B). In one embodiment the resin composition can be molded into an article having a strength at breaking point of not less than 14 MPa, a Shore D hardness of 50 to 67, and a flexural rigidity of 100 to 300 MPa.

In another preferred embodiment the resin composition comprises 20 to 90% by weight of an ionomer (A) and 10 to 80% by weight of a starchy material (B), wherein the ionomer is a zinc ionomer having a neutralization degree of 20 to 95% the ionomer comprising, as a base resin, an ethylene copolymer containing (meth)acrylic acid and alkyl (meth)acrylate as constituent units or a copolymer composition thereof wherein the content of (meth)acrylic acid unit is 10 to 15% by weight and the content of alkyl (meth)acrylate unit is 5 to 11% by weight and the ionomer has a melt flow rate at 190°C under a load of 2160 g of 0.05 to 500 g/10 min, said ethylene copolymer or copolymer composition being a tertiary or higher multi-copolymer.

According to the present invention, there are further provided molded articles comprising the above resin compositions. The present invention also provides use of the resin compositions of the invention for producing a molded article.

### Effects of the Invention:

The resin composition blended with the starchy material of the invention has affinity to the starchy material, and is obtained by blending the starchy material with a soft particular resin and/or a particular ionomer comprising the above resin as a base resin at a particular ratio. Therefore, the resin composition is homogeneously compatible even without adding a compatibility-imparting agent, can be favorably mold-worked despite the starchy material is contained in large amounts, and exhibits excellent balance between the flexibility and the mechanical properties.
Among the resin compositions blended with the starchy material of the invention, further, a particular one exhibits very excellent moisture permeability, antistatic property and transparency (haze) in addition to the above-mentioned properties.

By utilizing these features, a variety of articles can be molded, such as stretched or unstretched films, sheets, containers, pipes, tubes, filaments or any other extrusion-molded articles, injection-molded articles, hollow-molded articles, press-molded articles, vacuum-molded articles and foam-molded articles.

These molded articles can be used as one layer or more layers in a multi-layer constitution.

When molded as films, the films can be used as various kinds of packing films.

### Best Mode for Carrying Out the Invention:

Embodiments of the invention will now be described closely and concretely. As described already, the resin composition of the invention comprises 10 to 97% by weight of (a-1) an ethylene copolymer containing an unsaturated carboxylic acid and an unsaturated carboxylic acid ester as constituent units or a copolymer composition thereof and/or (a-2) an ionomer thereof as a base resin; and 3 to 90% by weight a starchy material (B) (contains 10 to 97% by weight of (a-1) an ethylene copolymer containing an unsaturated carboxylic acid and an unsaturated carboxylic acid ester as constituent units or a copolymer composition thereof and/or (a-2) an ionomer thereof as a base resin; and 3 to 90% by weight a starchy material (B)).

As the (a-1) ethylene copolymer that contains an unsaturated carboxylic acid and an unsaturated carboxylic acid ester which are resin components as constituent units or as the copolymer composition thereof used in the resin composition of the invention, there can be exemplified tertiary or higher multi-copolymers containing an ethylene, an unsaturated carboxylic acid and an unsaturated carboxylic acid ester as constituent units, such as an ethylene/unsaturated carboxylic acid/unsaturated carboxylic acid ester tercopolymer; as well as a copolymer composition (mixture) obtained by blending the above multi-copolymer and an ethylene/unsaturated carboxylic acid copolymer (a copolymer which contains an ethylene unit and an unsaturated carboxylic acid unit but does not contain an unsaturated carboxylic acid ester unit, preferably an ethylene/unsaturated carboxylic acid bicopolymer) and/or an ethylene/unsaturated carboxylic acid ester copolymer (a copolymer containing an ethylene unit and an unsaturated carboxylic acid ester unit but does not contain an unsaturated carboxylic acid unit, preferably an ethylene/unsaturated carboxylic acid ester bicopolymer); and a copolymer composition (mixture) obtained by blending the ethylene/unsaturated carboxylic acid copolymer and the ethylene/unsaturated carboxylic acid ester copolymer.
Among them, it is desired that the invention includes multi-copolymers of not lower than a tercopolymer.

When the ethylene copolymer or the copolymer composition is a tertiary or higher multi-copolymer, it is desired that the content of the unsaturated carboxylic acid which is the constituent unit is 3 to 30% by weight, more preferably, 5 to 25% by weight and, particularly, 10 to 15% by weight.
It is, further, desired that the content of the unsaturated carboxylic acid ester is 0.3 to 30% by weight, more preferably, 0.5 to 20% by weight and, particularly, 5 to 11% by weight.
If the content of the unsaturated carboxylic acid ester is smaller than the above range, flexibility and plasticity become insufficient.
If the content of the unsaturated carboxylic acid ester is larger than the above range, on the other hand, the heat resistance becomes low and the production becomes difficult.

As the unsaturated carboxylic acid that constitutes di-or multi-polymer in the present invention, there can be exemplified acrylic acid, methacrylic acid, ethacrylic acid, crotonic acid, fumaric acid, maleic aid, monomethyl maleate, maleic anhydride, itaconic acid and itaconic anhydride.
Among them, acrylic acid or methacrylic acid is particularly desired.

As the unsaturated carboxylic acid ester, there can be exemplified an alkyl ester such as of the above unsaturated carboxylic acid, and it is desired to use an alkyl group having 1 to 20 carbon atoms as the alkyl group. More concretely, there can be exemplified such alkyl groups as methyl, ethyl, n-propyl, isopropyl, n-butyl, isobutyl, 2-ethylhexyl and isooctyl.
Among them, it is particularly desired to use an alkyl ester of acrylic acid or methacrylic acid and, particularly, a methyl, an ethyl or an isobutyl ester of acrylic acid or methacrylic acid.

When the ethylene copolymer or the copolymer composition (a-1) is a copolymer mixture, the ethylene/unsaturated carboxylic acid copolymer to be blended may be a copolymer of ethylene and unsaturated carboxylic acids exemplified above concerning the multi-copolymer, such as ethylene/(meth)acrylic acid copolymer, etc., and the ethylene/unsaturated carboxylic acid ester copolymer may be a copolymer of ethylene and unsaturated carboxylic acid esters exemplified above concerning the multi-copolymer, such as ethylene/isobutyl (meth)acrylate copolymer, etc. The (meth)acrylic acid referred to in the invention stands for an acrylic acid or a methacrylic acid.

The preferred content of the unsaturated carboxylic acid component and the content of the unsaturated carboxylic acid ester component in the composition of the copolymer composition (a-1) are in the same ranges as the ranges of contents of the case of the multi-copolymer.

When (a-1) is a copolymer composition, there is no particular limitation on the ratio of mixing the copolymer components (tertiary or higher copolymer, ethylene/unsaturated carboxylic acid copolymer or ethylene/unsaturated carboxylic acid ester copolymer containing at least unsaturated carboxylic acid and unsaturated carboxylic acid ester as constituent units). Desirably, however, the copolymer components are so mixed that the content of the unsaturated carboxylic acid is 3 to 30% by weight and the content of the unsaturated carboxylic acid ester is 0.3 to 30% by weight in the copolymer composition.

Though there is no particular limitation, the copolymer composition is preferably prepared by melt-mixing (melt-blending) the molten copolymer components by using the Bumbury's mixer or an extruder at, for example, 150 to 200°C.

It is desired that the ethylene copolymer or the copolymer composition (a-1) has a melt flow rate (MFR) at 190°C under a load of 2160 g (measured in compliance with the JIS K7210-1999) of 0.05 to 500 g/10 min. and, particularly, 0.2 to 300 g/10 min.

Next, when the resin composition of the present invention is an ionomer comprising, as a base resin, the ethylene copolymer or the copolymer composition (a-1), it is desired that the neutralization degree due to cations such as metal ions which constitute an ion source is not higher than 95 mol% and, particularly, in a range of 20 to 95 mol%.

As the ion source, it is desired to use metal ions of a valency of 1 to 3 from the standpoint of compatibility with the starchy materials, and it is more desired to use Li, Na, K, Mg, Ca and Zn ions and it is particularly desired to Na (sodium) and K (potassium) ions.

If the ionomer containing sodium as an ion source is used, the mold workability is improved, an excellent balance is obtained between the flexibility and the mechanical properties, compatibility to the starchy material and dispersion thereof are improved and, therefore, the starchy material can be blended in increased amounts.

Further, if the ionomer containing potassium as an ion source is used, there can be obtained a resin composition blended with a starchy material which features favorable mold workability, excellent balance between the flexibility and the mechanical properties, and excellent moisture permeability, antistatic property and transparency (haze).

In the case of the ionomer, the neutralization degree due to cations such as metal ions serving as an ion source is in excess of 5%, preferably, not smaller than 20%, particularly preferably, not smaller than 60% and, most preferably, not smaller than 70%.

Here, however, the ionomer of not smaller than 95% is difficult to produce and becomes difficult to handle exhibiting strong hygroscopic property.

In particular, when the neutralization degree is not smaller than 60 mol% and, preferably, not smaller than 70 mol%, the obtained composition exhibits very excellent moisture permeability, antistatic property and transparency (haze).

It is, further, desired that the ionomer has a melt flow rate (MFR) at 190°C under a load of 2160 g (JIS K7210-1999) of 0.05 to 500 g/10 min. and, particularly, 0.2 to 300 g/10 min.

As the ionomer comprising, as a base resin, the ethylene copolymer or the copolymer composition (a-1), there can be exemplified an ionomer of a tertiary or higher copolymer containing ethylene, unsaturated carboxylic acid and unsaturated carboxylic acid ester as constituent units, a blend of the above ionomer of the multi-copolymer and an ethylene/unsaturated carboxylic acid copolymer and/or an ethylene/unsaturated carboxylic acid ester copolymer, a blend of the ionomer of the ethylene/unsaturated carboxylic acid copolymer and the above multi-copolymer and/or the ethylene/unsaturated carboxylic acid ester copolymer, the one obtained by ionomerizing a mixture of the ethylene/unsaturated carboxylic acid and the ethylene/unsaturated carboxylic acid ester, and the one obtained by blending the ethylene/unsaturated carboxylic acid ester copolymer and the above multi-copolymer and/or the ethylene/unsaturated carboxylic acid copolymer followed by ionomerization. Here, the ionomer (G-2) can be obtained by being neutralized with (a-1) of the base resin, oxides of various metals, carbonates and hydroxides thereof.

Among them, it is desired to use an ionomer which contains tertiary or higher multi-copolymer.

Preferred neutralization degree and MFR of the composition in the above blended ionomer lie in the same ranges as the above-mentioned preferred ranges.

In the invention, as the component (A) that can be mixed into the starchy material (B), it is more desired to use the ionomer (a-2) that is considered to be favorably compatible with the starchy material due to the action of metal ions in addition to that of the carboxyl group and the ester group thereof.

As the starchy material (B) used in the invention, there can be exemplified raw starches comprising amylose and amylopectin stemming from plants, such as corn starch, wheat starch, potato starch and rice startch, modified starches such as α-modified starch, oxidized starch and water-soluble starch, and reformed starch derivatives which are esterified like carboxymethylation, etherification and treatment with silicone or crosslinking.

Though not necessarily required, in order to further improve compatibility of the starchy material with the above resin and/or the ionomer, the resin composition of the invention may be blended with a compatibility-imparting agent in addition to the above (a-1) and/or (a-2).
As the compatibility-imparting agent, there can be exemplified a polyalkylene polyol rich in polar group, an aliphatic polyhydric alcohol (e.g., aliphatic polyhydric alcohol having three or more hydroxyl groups in the molecule) such as glycerin or a derivative, urea which is a reforming agent for the starch, ammonia for neutralizing unsaturated carboxylic acid that have not been still neutralized by metal ions and water.

There is no particular limitation on the method of producing a resin composition blended with a starchy material of the invention. Namely, the ethylene copolymer or the copolymer mixture (composition) and/or a mixture of the ionomer and the starchy material are melt-kneaded by using the Bumbury's mixer or the extruder to produce the resin composition blended with the starchy material.
In conducting the production, it is desired that the starchy material is partly or wholly formed like a paste with water in advance while being kneaded with the resin in order to homogeneously mix the starchy material and the ethylene copolymer or the copolymer mixture (composition) and/or the ionomer together.
The paste can be formed by, for example, heating and stirring the starch in the presence of hot water of not lower than 60°C.

The ethylene copolymer or the copolymer mixture and/or the ionomer and the starchy material can be melt-kneaded at a temperature of, for example, about 100 to about 180°C.
When the resin is, for example, an ionomer, it is considered that the above step induces a chemical interaction between the hydroxyl group of the starchy material and the metal ion of the ionomer or the carboxyl group, contributing to improving compatibility between the ionomer and the starchy material.

The ratio of blending at least one (A) of those selected from the ethylene copolymer or the copolymer mixture (composition) and/or the ionomer thereof as a base resin, and the starchy material (B), is 10 to 97% by weight and, preferably, 20 to 90% by weight for the former (A), and 3 to 90% by weight and, preferably, 10 to 80% by weight for the latter (B).
In the present invention, use of the component (A) makes it possible to blend the starchy material (B) in amounts larger than that of the component (A). However, blending (B) in amounts in excess of the above range is not desirable since it deteriorates the workability, mechanical strength of the obtained molded articles and transparency thereof.
According to the invention, a resin composition comprises 20 to 90% by weight of a sodium or potassium ionomer (a-3) having a neutralization degree of 50 to 98% and comprising, as a base resin, an ethylene copolymer having 10 to 15% by weight of a (meth) acrylic acid unit and 5 to 11% by weight of a (meth)acrylic acid alkyl ester unit or an ethylene copolymer composition thereof, and having a melt flow rate at 190°C under a load of 2160 g (in compliance with the JIS K7210-1999) of 0.05 to 500 g/10 min.; and 10 to 80% by weight of a starchy material (B). Here, the above resin composition can be particularly preferably molded into an article having a strength at breaking point of not less than 14 MPa, a Shore D hardness of 50 to 67, and a flexural rigidity of 100 to 300 MPa.

The resin composition of the invention can be blended with other thermoplastic resins in a range in which they do not impair the object of the invention.

When the other thermoplastic resins are to be used being mixed thereto, the resin composition can be used in an amount of 100 parts by weight and the other thermoplastic resins can be used in amounts of 1 to 2000 parts by weight and, preferably, 1 to 500 parts by weight.

As the other thermoplastic resins that are to be used, there can be exemplified polyolefin type resin, styrene type resin, polyamide, polyester, polycarbonate, polyacetal, polymethyl methacrylate, polyphenylene oxide, polyphenylene sulfide, polysulfone,-polyvinyl chloride, polyvinylidene chloride, polyvinyl alcohol and polyolefin elastomer which may be used in one kind or in two or more kinds in combination.

More concretely, as the polyolefin type resin, there can be representatively exemplified high-pressure low-density polyethylene, linear intermediate- to low-density polyethylene, high-density polyethylene, polypropylene, poly-1-butene, poly-4-methyl-1-pentene, ethylene/vinyl acetate copolymer, and ethylene/unsaturated carboxylic acid ester.

As the styrene type resin, there can be exemplified a homopolymer or a copolymer of styrene. Its representative examples include ABS resin, polystyrene, styrene/butadiene block copolymer and hydrogenated product thereof, as well as styrene/isoprene block copolymer and hydrogenated product thereof.
Here, the ABS resin generally stands for rubber-reinforced styrene type polymers synthesized by various production methods such as blending method, grafting method or grafting/blending method, and its representative examples include those obtained by graft-polymerizing a rubber component such as polybutadiene, styrene/butadiene rubber or ethylene/propylene/diene rubber with other monomers such as styrene and acrylonitrile, methyl methacrylate, α-methylstyrene, ethylenebisamide or maleimide.
The polystyrene stands for general polystyrenes synthesized by such methods as suspension polymerization and continuous polymerization, as well as shock-resistant polystyrenes obtained by graft-polymerizing a rubber component such as butadiene rubber with a styrene.

As the polyamide, there can be exemplified nylon 6, nylon 66, nylon 11, nylon 12, nylon 6T and nylon 6I and as the polyester, there can be exemplified polyethylene terephthalate, polybutylene terephthalate and polyester elastomer.

As required, further, the resin composition of the present invention may be blended with various additives that are usually used, such as antioxidant, pigment, aging stabilizer, ultraviolet-ray absorber, slipping agent, lubricant, wax, anti-blocking agent, inorganic filler, flame-retarding agent and foaming agent.

As the wax, there can be exemplified polyolefin waxes such as polypropylene wax, polyethylene wax and metallocene wax (e.g., metallocene-polymerized polyethylene wax), as well as petroleum-refined wax and carnauba wax. It is desired that the above additives are blended, usually, in an amount of not larger than 20 parts by weight and, particularly, not larger than 10 parts by weight per 100 parts by weight of the total amount of at least the one (A) selected from the ethylene copolymer or the copolymer mixture (composition) and/or the ionomer thereof as a base resin, and the starchy material (B).

The resin composition of the present invention can be molded into such articles as stretched and non-stretched films, sheets, containers, pipes, tubes, filaments and foamed bodies relying on ordinary extrusion-mold working, injection-mold working, hollow-mold working, press-mold working or vacuum-mold working.
By using a known extrusion laminator, further, there can be produced a laminate including at least one layer of the resin composition of the present invention.

### EXAMPLES

### [Examples 1 to 7, Comparative Examples 1 and 2]

To a powdery corn starch (produced by Wako Junyaku Co.) was added hot water (80 to 90°C) in an amount not less than the powdery corn starch, and the mixture was stirred for 2 to 3 minutes to obtain a paste thereof.

A starting resin or a starting resin composition (see Tables 1 and 2) and the above paste-like starch were added into a Laboplusto-mill (content of 100 ml) manufactured by Toyo Seiki Co. at ratios shown in Tables 3 and 4, and the mixture was kneaded at 130°C, 60 rpm for 15 minutes.

The mixture was taken out from the Laboplusto-mill and was hot-press-molded at 160°C under 50 kg/cm² to obtain a sheet having a thickness of 0.5 mm.

Properties were measured to obtain results as shown in Tables 3 and 4.

**Table 1**

| Starting resin | Ion species | MFR (g/10 min.) | Content of ethylene unit (w%) | Content of methacrylic acid unit (w%) | Content of acrylic acid ester unit (w%) | Neutralization degree (%) |
|---|---|---|---|---|---|---|
| Ionomer 1 | Zn | 1 | 80 | 10 | 10 (isobutyl) | 70 |
| Ionomer 2 | Na | 1 | 80 | 10 | 10 (isobutyl) | 36 |
| Ionomer 3 | Na | 0.9 | 85 | 15 | - | 54 |
| Ionomer 4 | K | 1.5 | 84.3 | 14.8 | 0.9 (methyl) | 84 |
| Ionomer 5 | K | 0.4 | 83.5 | 11.5 | 5 (isobutyl) | 80 |
| Ionomer 6* | K | 5(0.4)** | 87.3 | 12.7 | - | 80 |
| Ionomer A | K | 0.4 | 87.3 | 12.7 | | 80 |
| Ethylene copolymer | - | 55 | 75 | 8 | 17 (isobutyl) | - |

| | | | | | | |
|---|---|---|---|---|---|---|
| Ionomer 6*: A composition obtained by mixing the ionomer A (91% by weight) and a glycerin (9% by weight) together. ** The one containing glycerin (numeral in parenthesis is a value of the ionomer itself). Contents of the component units of ethylene, methacrylic acid and methyl acrylate in Table 1 are the contents in the ethylene copolymer in the base resin of the ionomers. | | | | | | |

**Table 2**

| Starting resin (ratio, wt%) | Ion species | MFR (g/10 min.) | Content of ethylene unit (w%) | Content of methacrylic acid unit (w%) | Content of acrylic acid ester unit (w%) | Neutralization degree (%) |
|---|---|---|---|---|---|---|
| Composition 1 | K | 5.9 | 79.6 | 11.4 | 9 | 54.5 |
| Ionomer 4(50) | | | | | | |
| Ethylene copolymer (50) | | | | | | |
| Composition 2 | K | 15.3 | 80.9 | 10.2 | 8.9 | 47.5 |
| Ionomer 6(50) | | | | | | |
| Ethylene copolymer (50) | | | | | | |
| | | | | | | |

Contents of the component units of ethylene, methacrylic acid and methyl acrylate in Table 1 are the contents in the base resin composition of before being neutralized.

**Table 3**

| | Ex. 1 | Ex. 2 | Ex. 3 | Ex. 4 | Ex. 5 | Comp. Ex. 1 | Comp. Ex. 2 |
|---|---|---|---|---|---|---|---|
| Starting resin (wt%) | ionomer 1 80 | ionomer 2 80 | ionomer 2 45 | *1 80 | *2 80 | ionomer 3 45 | ionomer 3 80 |
| Blended amount of starch (wt%) | 20 | 20 | 55 | 20 | 20 | 55 | 20 |
| MFR (g/10 min.) | 1.3 | 0.6 | 0.1 | 2.4 | 5.2 | 0.2 | 1.3 |
| Elongation at breaking point (%) | 303 | 256 | 34 | 234 | 383 | 8 | 233 |
| Strength at breaking point (MPa) | 14.8 | 17.6 | 18 | 17.6 | 17.2 | 26.7 | 25.9 |
| Hardness (Shore D) | 57 | 59 | 67 | 56 | 52 | 74 | 68 |
| Flexural rigidity (MPa) | 117 | 141 | 277 | 152 | 104 | 752 | 382 |
| Haze (%) | 81.5 | 44 | 66.6 | 37 | 46 | 71.9 | 15.7 |
| | | | | | | | |

| | | | | | | | |
|---|---|---|---|---|---|---|---|
| *1: composition 1 *2: composition 2 | | | | | | | |

**Table 4 (continued)**

| | Ex. 6 | Ex. 7 |
|---|---|---|
| Starting resin (wt%) | ionomer 4 80 | inonomer 5 80 |
| Blended amount of starch (wt%) | 20 | 20 |
| MFR (g/10 min.) | 0.4 | 0.2 |
| Elongation at breaking point (%) | 225 | 194 |
| Strength at breaking point (MPa) | 19.7 | 19.9 |
| Hardness (Shore D) | 62 | 60 |
| Flexural rigidity (MPa) | 349 | 294 |
| Haze (%) | 8.9 | 10.3 |
| Moisture permeability (g/m²/d) | 219 | 37.8 |
| Surface resistivity (Ω/□) | | |
| 50%RH | 21E+10 | 68E+11 |
| 30%RH | 53E+12 | Over* |
| | | |

| | | |
|---|---|---|
| * Higher than 1E + 13. | | |

### Measuring methods.

MFR = JIS K7210
Elongation at breaking point = JIS K6760
Strength at breaking point = JIS K6760
Hardness (Shore D) = JIS K7215
Flexural rigidity = JIS K7106
Cloudiness (haze) = JIS K7105
Moisture permeability = in compliance with JIS Z0208 (40°C, 90%RH)
Surface resistivity = in compliance with JIS K6911 (23°C, measured after left to stand for 24 hours)

It will be learned from Tables 3 and 4 that the sheets obtained from the resin compositions of the present invention have flexibility, mechanical strength large enough for practical use and excellent balance between the flexibility and the mechanical properties as compared to the sheets of Comparative Examples obtained from the ionomer resin compositions of base resins without containing acrylic acid ester component.
Further, the sheets obtained from the ionomers containing sodium and potassium as ion sources not only have flexibility but also relatively large breaking strengths.
It will be learned that the sheets obtained from the ionomers containing potassium as an ion source have excellent moisture permeability, antistatic property and transparency (haze).

## Claims

1. A resin composition comprising 10 to 97% by weight of at least one (A) of those selected from (a-1) an ethylene copolymer containing an unsaturated carboxylic acid and an unsaturated carboxylic acid ester as constituent units or a copolymer composition thereof, and (a-2) an ionomer comprising, as a base resin, (a-1) the ethylene copolymer containing the unsaturated carboxylic acid and the unsaturated carboxylic acid ester as constituent units or a copolymer composition thereof; and 3 to 90% by weight of a starchy material (B), wherein the copolymer composition is obtainable by blending the ethylene copolymer containing the unsaturated carboxylic acid and the unsaturated carboxylic acid ester as constituent units with an ethylene/unsaturated carboxylic acid copolymer and/or an ethylene/unsaturated carboxylic acid ester copolymer, or is obtainable by blending an ethylene/unsaturated carboxylic acid copolymer and an ethylene/unsaturated carboxylic acid ester polymer.

2. The resin composition according to claim 1, wherein the resin composition comprises 20 to 90% by weight of (A) and 10 to 80% by weight of (B).

3. The resin composition according to claim 1 or 2, wherein the content of the unsaturated carboxylic acid unit is 3 to 30% by weight and the content of the unsaturated carboxylic acid ester unit is 0.3 to 30% by weight in (a-1) the ethylene copolymer that contains the unsaturated carboxylic acid and the unsaturated carboxylic acid ester as constituent units or the copolymer composition thereof.

4. The resin composition according to any one of claims 1 to 3, wherein the unsaturated carboxylic acid is a (meth)acrylic acid and the unsaturated carboxylic acid ester is an alkyl (meth)acrylate in (a-1) the ethylene copolymer that contains the unsaturated carboxylic acid and the unsaturated carboxylic acid ester as constituent units or the copolymer composition thereof.

5. The resin composition according to any one of claims 1 to 4, wherein the ionomer comprising, as a base material, (a-1) the ethylene copolymer that contains the unsaturated carboxylic acid and the unsaturated carboxylic acid ester as constituent units or the copolymer composition thereof, is an ionomer containing monovalent to trivalent metals as an ion source.

6. The resin composition according to any one of the preceding claims
wherein the ionomer (a-2) is an ionomer containing lithium, sodium, potassium, magnesium, calcium or zinc as an ion source.

7. The resin composition according to claim 6, wherein the ionomer (a-2) is an ionomer containing zinc, sodium or potassium as an ion source.

8. The resin composition according to claim 6, wherein said ionomer (a-2) is an ionomer containing sodium and/or potassium as an ion source.

9. The resin composition according to any one of the preceding claims
wherein the starting material (B) comprises an amylose or amylopectin stemming from plants, a modified starch, or a reformed starch derivative which is esterified.

10. The resin composition according to claim 9, wherein the amylose or amylopectin stemming from plants is corn starch, wheat starch, potato starch or rice starch.

11. A resin composition according to any one of the preceding claims which composition is for molding and comprises 20 to 90% by weight of a sodium or potassium ionomer (a-3) having a neutralization degree of 50 to 98% and comprising, as a base resin, an ethylene copolymer having 10 to 15% by weight of a (meth)acrylic acid unit and 5 to 11% by weight of an alkyl (meth)acrylate unit or an ethylene copolymer composition thereof, and having a melt flow rate at 190°C under a load of 2160 g of 0.05 to 500 g/10 min.; and 10 to 80% by weight of a starchy material (B).

12. A resin composition according to any one claims 1 to 10, which composition comprises 20 to 90% by weight of an ionomer (A) and 10 to 80% by weight of a starchy material (B), wherein the ionomer is a zinc ionomer having a neutralization degree of 20 to 95% the ionomer comprising, as a base resin, an ethylene copolymer containing (meth)acrylic acid and alkyl (meth)acrylate as constituent units or a copolymer composition thereof wherein the content of (meth)acrylic acid unit is 10 to 15% by weight and the content of alkyl (meth)acrylate unit is 5 to 11% by weight and the ionomer has a melt flow rate at 190°C under a load of 2160 g of 0.05 to 500 g/10 min, said ethylene copolymer or copolymer composition being a tertiary or higher multi-copolymer.

13. A molded article comprising the resin composition of any one of claims 1 to 12.

14. A molded article according to claim 13, which comprises a resin composition of claim 11 and which article has a strength at breaking point of not less than 14 MPa, a Shore D hardness of 50 to 67, and a flexural rigidity of 100 to 300 MPa.

15. Use of a resin composition according to any one of claims 1 to 12 for producing a molded article.

## Patentansprüche

1. Harzzusammensetzung, umfassend 10 bis 97 Gew.-% mindestens eines Bestandteils (A), der ausgewählt ist aus (a-1) einem Ethylen-Copolymeren mit einem Gehalt an einer ungesättigten Carbonsäure und einem ungesättigten Carbonsäureester als Struktureinheiten oder einer Copolymerzusammensetzung davon und (a-2) einem Ionomeren, umfassend als Basisharz (a-1) das Ethylen-Copolymere mit einem Gehalt an der ungesättigten Carbonsäure und dem ungesättigten Carbonsäureester als Struktureinheiten oder einer Copolymerzusammensetzung davon; und 3 bis 90 Gew.-% eines stärkehaltigen Materials (B), wobei die Copolymerzusammensetzung erhältlich ist durch Vermischen des Ethylen-Copolymeren mit einem Gehalt an der ungesättigten Carbonsäure und dem ungesättigten Carbonsäureester als Struktureinheiten mit einem Ethylen/ungesättigte Carbonsäure-Copolymeren und/oder einem Ethylen/ungesättigter Carbonsäureester-Copolymeren, oder erhätlich ist durch Vermischen eines Ethylen/ungesättigte Carbonsäure-Copolymeren und eines Ethylen/ungesättigter Carbonsäureester-Polymeren.

2. Harzzusammensetzung nach Anspruch 1, wobei die Harzzusammensetzung 20 bis 90 Gew.-% (A) und 10 bis 80 Gew.-% (B) umfasst.

3. Harzzusammensetzung nach Anspruch 1 oder 2, wobei in (a-1) dem Ethylen-Copolymeren, das die ungesättigte Carbonsäure und den ungesättigten Carbonsäureester als Struktureinheiten oder die Copolymerzusammensetzung davon enthält, der Anteil der ungesättigten Carbonsäure-Einheit 3 bis 30 Gew,-% und der Anteil der ungesättigten Carbonsäureester-Einheit 0,3 bis 30 Gew.-% beträgt.

4. Harzzusammensetzung nach einem der Ansprüche 1 bis 3, wobei es sich in (a-1) dem Ethylen-Copolymeren, das die ungesättigte Carbonsäure und den ungesättigten Carbonsäureester als Struktureinheiten oder die Copolymerzusammensetzung davon enthält, bei der ungesättigten Carbonsäure um (Meth)acrylsäure und beim ungesättigten Carbonsäureester um ein Alkyl(meth)acrylat handelt.

5. Harzzusammensetzung nach einem der Ansprüche 1 bis 4, wobei es sich beim Ionomeren, das als Basismaterial (a-1) das Ethylen-Copolymere, das die ungesättigte Carbonsäure und den ungesättigten Carbonsäureester als Struktureinheiten oder die Copolymerzusammensetzung davon enthält, um ein Ionomeres mit einem Gehalt an einwertigen bis dreiwertigen Metallen als Ionenquelle handelt.

6. Harzzusammensetzung nach einem der vorstehenden Ansprüche, wobei es sich beim Ionomeren (a-2) um ein Ionomeres mit einem Gehalt an Lithium, Natrium, Kalium, Magnesium, Calcium oder Zink als Ionenquelle handelt.

7. Harzzusammensetzung nach Anspruch 6, wobei es sich beim Ionomeren (a-2) um ein Ionomeres mit einem Gehalt an Zink, Natrium oder Kalium als Ionenquelle handelt.

8. Harzzusammensetzung nach Anspruch 6, wobei es sich beim Ionomeren (a-2) um ein Ionomeres mit einem Gehalt an Natrium und/oder Kalium als Ionenquelle handelt.

9. Harzzusammensetzung nach einem der vorstehenden Ansprüche, wobei es sich beim stärkehaltigen Material (B) um eine Amylose oder Amylopectin, die aus Pflanzen stammen, eine modifizierte Stärke oder ein reformiertes Stärkederivat, das verestert ist, handelt.

10. Harzzusammensetzung nach Anspruch 9, wobei es sich bei der Amylose oder dem Amylopectin, die aus Pflanzen stammen, um Maisstärke, Weizenstärke, Kartoffelstärke oder Reisstärke handelt.

11. Harzzusammensetzung nach einem der vorstehenden Ansprüche, wobei die Zusammensetzung Formgebungszwecken dient und 20 bis 90 Gew.-% eines Natrium- oder Kalium-Ionomeren (a-3) mit einem Neutralisationsgrad von 50 bis 98 % umfasst und als Basisharz ein Ethylen-Copolymeres mit 10 bis 15 Gew.-% einer (Meth)acrylsäure-Einheit und 5 bis 11 Gew.-% einer Alkyl(meth)acrylat-Einheit oder eine Ethylen-Copolymerzusammensetzung davon umfasst, eine Fließfähigkeit bei 190°C unter einer Last von 2160 g von 0,05 bis 500 g/10 min aufweist; und 10 bis 80 Gew.-% eines stärkehaltigen Materials (B) umfasst.

12. Harzzusammensetzung nach einem der Ansprüche 1 bis 10, wobei die Zusammensetzung 20 bis 90 Gew.-% eines Ionomeren (A) und 10 bis 80 Gew.-% eines stärkehaltigen Materials (B) umfasst, wobei es sich beim Ionomeren um ein Zink-Ionomeres mit einem Neutralisationsgrad von 20 bis 95 % handelt, wobei das Ionomere als Basisharz ein Ethylen-Copolymeres mit einem Gehalt an (Meth)acrylsäure und Alkyl(meth)acrylat als Struktureinheiten oder eine Copolymerzusammensetzung davon umfasst, wobei der Anteil der (Meth)acrylsäure-Einheit 10 bis 15 Gew.-% und der Anteil der Alkyl(meth)acrylat-Hinheit 5 bis 11 Gew.-% beträgt und das Ionomere eine Fließfähigkeit bei 190°C unter einer Last von 2160 g von 0,05 bis 500 g/10 min aufweist, wobei es sich beim Ethylen-Copolymeren oder der Copolymerzusammensetzung um ein tertiäres oder höheres Multicopolymeres handelt.

13. Formkörper, umfassend die Harzzusammensetzung nach einem der Ansprüche 1 bis 12.

14. Formkörper nach Anspruch 13, der eine Harzzusammensetzung nach Anspruch 11 umfasst und der eine Festigkeit am Brechpunkt von nicht unter 14 MPa, eine Shore D-Härte von 50 bis 67 und eine Biegesteifigkeit von 100 bis 300 MPa aufweist.

15. Verwendung eines Harzzusammensetzung nach einem der Ansprüche 1 bis 12 zur Herstellung eines Formkörpers.

## Revendications

1. Composition de résine comprenant de 10 à 97 % en poids d'au moins un composant (A) choisi parmi
a-1) un copolymère d'éthylène comprenant, en tant que motifs constitutifs, un acide carboxylique insaturé et un ester d'acide carboxylique insaturé, ou une composition de copolymères à base d'un tel copolymère,
a-2) et un ionomère comprenant, comme résine de base, un copolymère (a-1) d'éthylène comprenant, en tant que motifs constitutifs, un acide carboxylique insaturé et un ester d'acide carboxylique insaturé, ou une composition de copolymères à base d'un tel copolymère ;
et de 3 à 90 % en poids d'une matière amylacée (B),
étant entendu que ladite composition de copolymères est accessible par mélangeage dudit copolymère d'éthylène comprenant, en tant que motifs constitutifs, un acide carboxylique insaturé et un ester d'acide carboxylique insaturé, avec un copolymère d'éthylène et d'acide carboxylique insaturé et/ou un copolymère d'éthylène et d'ester d'acide carboxylique insaturé, ou est accessible par mélangeage d'un copolymère d'éthylène et d'acide carboxylique insaturé et d'un polymère d'éthylène et d'ester d'acide carboxylique insaturé.

2. Composition de résine conforme à la revendication 1, laquelle composition de résine comprend de 20 à 90 % en poids de composant (A) et de 10 à 80 % en poids de composant (B).

3. Composition de résine conforme à la revendication 1 ou 2, dans laquelle, dans le copolymère (a-1) d'éthylène comprenant, en tant que motifs constitutifs, un acide carboxylique insaturé et un ester d'acide carboxylique insaturé ou dans la composition de copolymères à base d'un tel copolymère, la proportion de motifs d'acide carboxylique insaturé vaut de 3 à 30 % en poids et la proportion de motifs d'ester d'acide carboxylique insaturé vaut de 0,3 à 30 % en poids.

4. Composition de résine conforme à l'une des revendications 1 à 3, dans laquelle, dans le copolymère (a-1) d'éthylène comprenant, en tant que motifs constitutifs, un acide carboxylique insaturé et un ester d'acide carboxylique insaturé ou dans la composition de copolymères à base d'un tel copolymère, l'acide carboxylique insaturé est de l'acide acrylique ou méthacrylique et l'ester d'acide carboxylique insaturé est un acrylate ou méthacrylate d'alkyle.

5. Composition de résine conforme à l'une des revendications 1 à 4, dans laquelle le ionomère comprenant comme matériau de base un copolymère (a-1) d'éthylène comprenant, en tant que motifs constitutifs, un acide carboxylique insaturé et un ester d'acide carboxylique insaturé, ou une composition de copolymères à base d'un tel copolymère, est un ionomère qui contient, en tant que source d'ions, un métal ou des métaux monovalent(s) à trivalent(s).

6. Composition de résine conforme à l'une des revendications précédentes, dans laquelle le ionomère (a-2) est un ionomère qui contient, en tant que source d'ions, du lithium, du sodium, du potassium, du magnésium, du calcium ou du zinc.

7. Composition de résine conforme à la revendication 6, dans laquelle le ionomère (a-2) est un ionomère qui contient, en tant que source d'ions, du zinc, du sodium ou du potassium.

8. Composition de résine conforme à la revendication 6, dans laquelle le ionomère (a-2) est un ionomère qui contient, en tant que source d'ions, du sodium et/ou du potassium.

9. Composition de résine conforme à l'une des revendications précédentes, dans laquelle le composant de départ (B) comprend un amylose ou une amylopectine d'origine végétale, un amidon modifié, ou un dérivé d'amidon reformé qui est estérifié.

10. Composition de résine conforme à la revendication 9, dans laquelle l'amylose ou l'amylopectine d'origine végétale est de l'amidon de maïs, de l'amidon de blé, de l'amidon de pomme de terre ou de l'amidon de riz.

11. Composition de résine conforme à l'une des revendications précédentes, laquelle composition est conçue pour être moulée et comprend de 20 à 90 % en poids d'un ionomère (a-3) au sodium ou au potassium, dont le degré de neutralisation vaut de 50 à 98 %, qui comprend, en tant que résine de base, un copolymère d'éthylène comportant de 10 à 15 % en poids de motifs d'acide acrylique ou méthacrylique et de 5 à 11 % en poids de motifs d'acrylate ou méthacrylate d'alkyle ou une composition de copolymères d'éthylène à base d'un tel copolymère, et qui présente un indice de fluidité à chaud, mesuré à 190 °C sous une charge de 2160 g, de 0,05 à 500 g/10 min, et de 10 à 80 % en poids d'une matière amylacée (B).

12. Composition de résine conforme à l'une des revendications 1 à 10, laquelle composition comprend de 20 à 90 % en poids d'un ionomère (A) et de 10 à 80 % en poids d'une matière amylacée (B), lequel ionomère est un ionomère au zinc dont le degré de neutralisation vaut de 20 à 95 %, lequel ionomère comprend, en tant que résine de base, un copolymère d'éthylène qui comprend, en tant que motifs constitutifs, un acide acrylique ou méthacrylique et un acrylate ou méthacrylate d'alkyle, ou une composition de copolymères à base d'un tel copolymère, et dans lequel la proportion de motifs d'acide acrylique ou méthacrylique vaut de 10 à 15 % en poids et la proportion de motifs d'acrylate ou méthacrylate d'alkyle vaut de 5 à 11% en poids, et lequel ionomère présente un indice de fluidité à chaud, mesuré à 190 °C sous une charge de 2160 g, de 0,05 à 500 g/10 min, ledit copolymère d'éthylène ou ladite composition de copolymères étant un multi-copolymère ternaire ou de degré supérieur.

13. Article moulé comprenant une composition de résine conforme à l'une des revendications 1 à 12.

14. Article moulé conforme à la revendication 13, qui comprend une composition de résine conforme à la revendication 11 et qui présente une résistance au point de rupture d'au moins 14 MPa, une dureté Shore D de 50 à 67 et une rigidité en flexion de 100 à 300 MPa.

15. Utilisation d'une composition de résine conforme à l'une des revendications 1 à 12 pour la production d'un article moulé.
